# FASCICULE DE BREVET EUROPEEN

(11) **EP 2 449 023 B1**
(45) Date de publication et mention de la délivrance du brevet: **05.03.2014**
(21) Numéro de dépôt: 10729836.6
(22) Date de dépôt: 28.06.2010
(51) Int. Cl.: C08L 9/00, B60C 1/00, C08L 53/00, C08L 25/08

(54) **PNEUMATIQUE DONT LA BANDE DE ROULEMENT COMPREND UN ELASTOMERE THERMOPLASTIQUE SATURE**
REIFEN MIT EINER THERMOPLASTISCHEN ELASTOMER ENTHALTENDEN LAUFFLÄCHE
TIRE HAVING A TREAD COMPRISING A THERMOPLASTIC ELASTOMER

(30) Priorité: 29.06.2009 FR 0954405
(43) Date de publication de la demande: 09.05.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LOPEZ, Béatrice, F-63720 Chavaroux (FR); VASSEUR, Didier, F-63100 Clermont-Ferrand (FR)
(74) Mandataire: Ribière, Joel
(86) Numéro de dépôt international: PCT/EP2010/059124
(87) Numéro de publication internationale: WO 2011/000797

(56) Documents cités:
- EP-A1- 0 902 054
- FR-A1- 2 877 348
- US-A1- 2008 045 643
- US-A1- 2008 188 621

## Description

La présente invention est relative aux bandes de roulement de pneumatiques et aux compositions de caoutchoucs à base d'élastomères diéniques et d'élastomères thermoplastiques styréniques saturés, utilisées pour la fabrication de telles bandes de roulement de pneumatique.

Un pneumatique doit obéir de manière connue à un grand nombre d'exigences techniques, souvent antinomiques, parmi lesquelles une résistance élevée à l'usure, une faible résistance au roulement, une adhérence élevée sur route sèche comme mouillée et un bon comportement routier (« handling ») sur véhicule automobile.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica),* capables de rivaliser, du point de vue du pouvoir renforçant, avec les noirs de carbone conventionnels de grade pneumatique.

Pour améliorer le comportement routier, on sait qu'une rigidité supérieure de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement (voir par exemple le document WO 02/10269).

Toutefois, de manière connue, une telle rigidification de la bande de roulement peut pénaliser les propriétés d'hystérèse et donc de résistance au roulement des pneumatiques.

Poursuivant leurs recherches, les Demanderesses ont découvert une bande de roulement de pneumatique comportant une composition de caoutchouc spécifique, à base d'un polybutadiène et d'un copolymère TPS saturé, qui permet d'améliorer la rigidité et donc le comportement routier des pneumatiques, sans pénaliser l'hystérèse.

Ainsi, un premier objet de l'invention concerne un pneumatique comportant une bande de roulement comprenant une composition élastomère, la dite composition comprenant :
- de 10 à 60 pce d'un élastomère polybutadiène (BR) ;
- plus de 15 à moins de 55 pce d'un élastomère thermoplastique styrénique (TPS) saturé ;
- une charge renforçante.

Les pneumatiques de l'invention sont particulièrement destinés à équiper des véhicules à moteur de type tourisme, SUV (*"Sport Utility Vehicles"*)*,* deux roues (notamment motos), avions, comme des véhicules industriels choisis parmi camionnettes et "Poids-lourd", c'est-à-dire métro, bus, engins de transport routier (camions, tracteurs, remorques), véhicules hors-la-route tels qu'engins agricoles ou de génie civil, autres véhicules de transport ou de manutention.

L'invention ainsi que ses avantages seront aisément compris à la lumière de la description et des exemples de réalisation qui suivent.

### I - MESURES ET TESTS UTILISES

Les compositions de caoutchouc utilisées dans les pneumatiques selon l'invention sont caractérisées, avant et après cuisson, comme indiqué ci-après.

### I.1 - Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accomodation au taux d'extension prévu pour la mesure elle-même) les modules sécants nominaux (ou contraintes apparentes, en MPa) à 10% d'allongement (noté MA10) et à 100% d'allongement (noté MA100). Toutes ces mesures de traction sont effectuées dans les conditions normales de température (23 ± 2°C) et d'hygrométrie (50 ± 5% d'humidité relative), selon la norme française NF T 40-101 (décembre 1979).

### I.2 - Dureté shore A

La dureté shore A des compositions après cuisson est appréciée conformément à la norme ASTM D 2240-86.

### I.3 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température, sous une contrainte fixe de 0,7 MPa, on enregistre la valeur de tan(δ) observée à 40°C (soit tan(δ)_{40°C}).

On rappelle que, de manière bien connue de l'homme du métier, la valeur de tan(δ)_{40°C} est représentative de l'hystérèse du matériau donc de la résistance au roulement : plus tan(δ)_{40°C} est faible, plus la résistance au roulement est réduite.

### II - CONDITIONS DE REALISATION DE L'INVENTION

Le pneumatique selon l'invention qui comprend une bande de roulement comportant une composition élastomère comprenant au moins :
- de 10 à 60 pce d'un élastomère polybutadiène (en abrégé «BR »);
- plus de 15 à moins de 55 pce d'un élastomère thermoplastique styrénique (en abrégé « TPS ») saturé ;
- une charge renforçante.

« Pce » signifie parties en poids pour cent parties d'élastomère total, donc y compris l'élastomère TPS saturé.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II. 1 - Elastomère diénique

Par « élastomère » (ou « caoutchouc », les deux étant considérés comme synonymes) du type "diénique", on rappelle ici que doit être compris de manière connue un élastomère issu au moins en partie (i.e., un homopolymère ou un copolymère) de monomères diènes (monomères porteurs de deux doubles liaisons carbone-carbone, conjuguées ou non).

La bande de roulement du pneumatique selon l'invention comporte une composition de caoutchouc qui a pour première caractéristique essentielle de comporter un polybutadiène (BR) dans une quantité de 10 à 60 pce. En dessous du minimum indiqué, la résistance à l'usure risque de diminuer de manière sensible tandis qu'au-dessus du maximum préconisé, les performances d'adhérence sur sol mouillé sont dégradées. Pour ces raisons, le taux de polybutadiène est préférentiellement compris dans un domaine de 20 à 55 pce.

A titre de monomères butadiène conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène.

Conviennent notamment les BR ayant une teneur (% molaire) en unités -1,2 comprise entre 4% et 80% ou ceux ayant une teneur (% molaire) en cis-1,4 supérieure à 80%, plus préférentiellement supérieur à 90 %.

Selon un mode de realisation préférentiel, l'élastomère BR est le seul élastomère diénique présent dans la composition.

Selon un autre mode de realisation préférentiel, la composition de caoutchouc de la bande de roulement du pneumatique selon l'invention peut comprendre un second élastomère diénique dont le taux est de préférence compris entre 0 et 80 pce, plus préférentiellement dans une domaine de 5 à 60 pce.

Le second élastomère diénique est choisi dans le groupe constitué par les copolymères styrène-butadiène (SBR), le caoutchouc naturel (NR), les polyisoprènes de synthèse (IR), les copolymères de isoprène-styrène (SIR), les copolymères d'isoprène-butadiène (BIR), les terpolymères de styrène-butadiène-isoprène (SBIR) et les mélanges de ces élastomères.

De préférence, le second elastomère diénique est un élastomère SBR. Les copolymères SBR peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973).

L'élastomère SBR peut être un SBR préparé en émulsion ("ESBR") ou un SBR préparé en solution ("SSBR"). Dans le cas d'un elastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°.

### II.2 - Elastomère thermoplastique styrénique saturé

Le pneumatique selon l'invention comporte une composition de caoutchouc qui a pour autre caractéristique essentielle de comporter un élastomère TPS saturé dans une quantité de plus de 15 à moins de 55 pce. En dessous de 10 pce, la rigidité de la composition n'est pas suffisamment améliorée, au-delà de 60 pce, l'hystérèse risque d'être pénalisée.

Les élastomères thermoplastiques styréniques (en abrégé "TPS") sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Dans la présente demande, on entend par définition et de manière connue :
- par élastomère TPS saturé, un élastomère TPS qui ne comporte aucune insaturation éthylénique (i.e., aucune double liaison carbone-carbone) ;
- par élastomère TPS insaturé, un élastomère TPS qui est pourvu d'insaturations éthyléniques, c'est-à-dire qui comporte des doubles liaisons carbone-carbone (conjuguées ou non).

Selon un mode de réalisation préférentiel, le copolymère de TPS saturé est un copolymère comportant des blocs styrène et des blocs alkylènes. Les blocs alkylènes sont préférentiellement de l'éthylène, du propylène ou du butylène.

De préférence, l'élastomère TPS saturé est choisi dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS, les copolymères de SEEPS et les mélanges de ces copolymères.

Selon un mode de réalisation préférentiel de l'invention, les taux de styrène de l'élastomère TPS saturé est compris entre 5 et 50%. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

La masse moléculaire moyenne en nombre (notée Mn) de l'élastomère TPS saturé est préférentiellement comprise entre 50 000 et 500 000 g/mol, plus préférentiellement comprise entre 75 000 et 450 000, notamment pour une utilisation de la composition dans une bande de roulement de pneumatique.

La masse moléculaire Mn est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

A titre d'exemples d'élastomères TPS saturés commercialement disponibles, on peut citer les élastomères de type SEPS, SEEPS, ou SEBS, commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 »).

### II.3 - Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" *("non-black filler")* par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(1) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 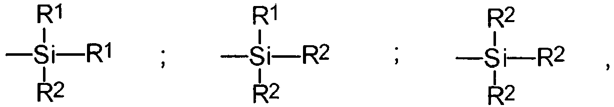 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment bisulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc des pneumatiques conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.4 - Additifs divers

Les compositions de caoutchouc des bandes de roulement des pneumatiques conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Selon un mode de réalisation préférentiel, les bandes de roulement des pneumatiques selon l'invention comportent en outre des compositions de caoutchouc qui comprennent un agent plastifiant. De préférence cet agent plastifiant est une résine hydrocarbonée solide, un plastifiant liquide, ou un mélange des deux.

Le taux d'agent plastifiant est préférentiellement compris entre 5 et 50 pce, plus préférentiellement compris entre 10 et 40 pce, par exemple entre 15 et 35 pce.

Selon un premier mode de réalisation préférentiel de l'invention, cet agent plastifiant est une résine hydrocarbonée dont la Tg est supérieure à 0°C, de préférence supérieure à + 20°C.

De manière connue de l'homme du métier, la dénomination "résine " est réservée dans la présente demande, par définition, à un composé qui est un solide à température ambiante (23°C) (par opposition à un composé plastifiant liquide tel qu'une huile).

De préférence, la résine plastifiante hydrocarbonée présente au moins une quelconque des caractéristiques suivantes :
- une Tg supérieure à 20°C, plus préférentiellement supérieure à 30°C ;
- une masse moleculaire moyenne en nombre (Mn) comprise entre 400 et 2000 g/mol, plus préférentiellement entre 500 et 1500 g/mol ;
- un indice de polymoleccularité (Ip) inférieur à 3, plus préférentiellement inférieur à 2 (rappel: Ip Mw Mn avec Mw masse moléculaire moyenne en poids).

Plus préférentiellement, cette résine plastifiante hydrocarbonée présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l : débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9 et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

Parmi les résines plastifiantes hydrocarbonées ci-dessus, on citera notamment les résines d'homo- ou copolymères d'alphapinène, betapinène, dipentène ou polylimonène, les résines d'homopolymère ou copolymère de coupe C5, les résines d'homopolymère ou copolymère de coupe C9 et les mélanges de ces résines, utilisables seules ou en combinaison avec un plastifiant liquide par exemple une huile, telle que MES ou TDAE.

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

A titre d'exemple de résines préférentielles, on peut citer notamment les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g).

Les résines alpha-méthyl-styrène, notamment modifiées phénol, décrites précédemment sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g); "Silvares 600" (Mn = 850 g/mol ; Ip = 1,4 ; Tg = 50°C ; indice d'hydroxyle = 31 mg KOH/g).

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
- résines de copolymère limonène/ styrène : par DRT sous dénomination "Dercolyte TS 105" de la société DRT, par ARIZONA Chemical Company sous dénominations "ZT115LT" et "ZT5100".

Selon un autre mode de réalisation préférentiel de l'invention, le plastifiant est un plastifiant liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. Conviennent particulièrement les plastifiants liquides choisis dans le groupe constitué par les huiles naphténiques, notamment hydrogénées, les huiles paraffiniques, les huiles MES, les huiles TDAE, les plastifiants esters, éthers, les plastifiants phosphates et sulfonates et les mélanges de ces composés.

Sont particulièrement préférés les composés choisis dans le groupe constitué par les phosphates, les trimellitates, les pyromellitates, les phtalates, les 1,2-cyclohexane dicarboxylates, les adipates, les azélaates, les sébacates, les triesters de glycérol et les mélanges de ces composés.

### II.5 - Préparation des compositions de caoutchouc

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un polybutadiène, au cours d'une première étape (dite "non-productive"), au moins un élastomère TPS saturé et une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (de 10 à 60 pce de polybutadiène, de plus de 15 à moins de 55 pce de copolymère thermoplastique styrénique saturé, la charge renforçante), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

### III -EXEMPLES DE REALISATION DE L'INVENTION

### III. 1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement de 10 à 60 pce de polybutadiène, de plus de 15 à moins de 55 pce de TPS saturé, la charge renforçante (silice et noir de carbone), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais

Ces essais démontrent l'amélioration de la rigidité des compositions des bandes de roulement pour pneumatiques selon l'invention sans modifier l'hystérèse, comparativement à une bande de roulement de l'essai témoin.

Pour cela, huit compositions de caoutchouc ont été préparées comme indiqué précédemment, six conformes à l'invention (notées ci-après C.2, C.3, C.4, C.6, C.7, C.8) et deux non conformes (témoins, notées ci-après C.1 et C.5).

Leurs formulations (en pce) et les résultats des tests ont été résumés dans les tableaux 1, 2, 3 annexés.

Les compositions C.1 et C.5 sont deux compositions références pour l'homme du métier, à base de SBR et BR. conventionnellent utilisées pour fabriquer des bandes de roulement de Pneus Verts pour véhicules tourisme.

Les compositions C.2, C.3, C.4 des bandes de roulement des pneumatiques selon l'invention sont à base de BR et d'un TPS saturé, respectivement du SEPS, du SEEPS, et SEBS. Les compositions C.6, .7, C.8 des bandes de roulement des pneumatiques selon l'invention sont à base de BR, SBR et d'un TPS saturé, respectivement du SEPS, du SEEPS, et SEBS. Les compositions C.1 à C.8 comprennent toutes un agent plastifiant comportant une résine hydrocarbonée (une résine polylimonène) et un plastifiant liquide (une huile MES).

On note tout d'abord que les compositions C.2, C.3, C.4 d'une part et C.6, C.7, C.8 d'autre part des bandes de roulement des pneumatiques selon l'invention présentent des valeurs de dureté shore A, de modules MA10 et MA100 qui sont toutes augmentées par rapport aux compositions témoins C.1 et C.5. Cette augmentation de rigidité est pour l'homme du métier un indicateur reconnu d'une amélioration du comportement routier des véhicules équipés de pneumatiques conformes à l'invention.

On note ensuite que les compositions des bandes de roulement du pneumatique selon l'invention présentent une valeur de tan(δ)_{40°C} qui est sensiblement égale à celle des compositions témoins respectivement C.1 et C.5, ce qui est synonyme d'une hystérèse et donc d'une résistance au roulement équivalentes.

En conclusion, les résultats de ces essais démontrent que l'emploi combiné d'un polybutadiène et d'un copolymère TPS saturé dans les proportions requises, permet d'améliorer de manière notable la rigidité des compositions et donc le comportement routier des bandes de roulement des pneumatiques selon l'invention, tout en conservant une faible hystérèse et donc une résistance au roulement non dégradées par rapport à celles des pneumatiques verts conventionnels.

**Tableau 1**

| Composition n° | C.1 | C.2 | C.3 | C.4 |
|---|---|---|---|---|
| BR (1) | 50 | 50 | 50 | 50 |
| SBR (2) | 50 | - | - | - |
| Elastomère TPS (3) | - | 50 | - | - |
| Elastomère TPS (4) | - | - | 50 | - |
| Elastomère TPS (5) | - | - | - | 50 |
| Silice (6) | 90 | 90 | 90 | 90 |
| Agent de couplage (7) | 7,2 | 7,2 | 7,2 | 7,2 |
| Noir de carbone (8) | 4 | 4 | 4 | 4 |
| Plastifiant (9) | 19 | 19 | 19 | 19 |
| Plastifiant (10) | 20 | 20 | 20 | 20 |
| Acide stéarique(11) | 3 | 3 | 3 | 3 |
| ZnO (12) | 2 | 2 | 2 | 2 |
| Soufre (13) | 1,4 | 1,4 | 1,4 | 1,4 |
| CBS (14) | 1,6 | 1,6 | 1,6 | 1,6 |
| DPG (15) | 2,1 | 2,1 | 2,1 | 2,1 |
| Antioxydant (16) | 1,5 | 1,5 | 1,5 | 1,5 |
| Antiozonant (17) | 2,2 | 2,2 | 2,2 | 2,2 |

| | | | | |
|---|---|---|---|---|
| (1) BR avec 4,3% de 1-2 ; 2,7% de trans ; 93% de cis 1-4 (Tg = - 106°C) ; (2) SBR solution (taux exprimé en SBR sec) ; 25% de styrène, 58 % de motifs polybutadiène 1-2 et 22% de motifs polybutadiène 1-4 trans (Tg = - 21°C) ; (3) TPS SEPS (« Septon 2007 » de la société Kuraray) ; (4) TPS SEEPS (« Septon 4033 » de la société Kuraray ) ; (5) TPS SEBS (« Septon 8004 » de la société Kuraray) ; (6) silice (« Zeosil 1165 MP » de la société Rhodia, type « HD ») - (BET et CTAB : environ 160 m²/g) ; (7) agent de couplage TESTP (« Si69 » de la société Degussa) ; (8) Noir de carbone : N234 (grade ASTM) ; (9) huile MES (« Catenex SNR » de la société Shell) ; (10) résine polylimonène (« Dercolyte L120 de la société DRT) ; (11) stéarine ( "Pristerene" de la société Uniquema) ; (12) oxyde de zinc (grade industriel - société Umicore) ; (13) soufre ; (14) N-cyclohexyl-2-benzothiazyl-sulfénamide (Santocure CBS de la société Flexsys) ; (15) DPG = Diphénylguanidine (« Perkacit DPG » de la société Flexsys) ; (16) N-1,3-diméthylbutyl-N-phénylparaphénylènediamine (Santoflex 6-PPD de la société Flexsys) ; (17) Cire anti-ozone. | | | | |

**Tableau 2**

| Composition n° | C.5 | C.6 | C.7 | C.8 |
|---|---|---|---|---|
| BR (1) | 30 | 30 | 30 | 30 |
| SBR (2) | 70 | 50 | 50 | 50 |
| Elastomère TPS (3) | - | 20 | - | - |
| Elastomère TPS (4) | - | - | 20 | - |
| Elastomère TPS (5) | - | - | - | 20 |
| Silice (6) | 82 | 82 | 82 | 82 |
| Agent de couplage (7) | 6,6 | 6,6 | 6,6 | 6,6 |
| Noir de carbone (8) | 4 | 4 | 4 | 4 |
| Plastifiant (9) | 20 | 20 | 20 | 20 |
| Plastifiant (10) | 12 | 12 | 12 | 12 |
| Acide stéarique(11) | 2 | 2 | 2 | 2 |
| ZnO (12) | 1,5 | 1,5 | 1,5 | 1,5 |
| Soufre (13) | 1,2 | 1,2 | 1,2 | 1,2 |
| CBS (14) | 1,9 | 1,9 | 1,9 | 1,9 |
| DPG (15) | 1,5 | 1,5 | 1,5 | 1,5 |
| Antioxydant (16) | 1,5 | 1,5 | 1,5 | 1,5 |
| Antiozonant (17) | 1,9 | 1,9 | 1,9 | 1,9 |

| | | | | |
|---|---|---|---|---|
| (1) BR avec 4,3% de 1-2 ; 2,7% de trans ; 93% de cis 1-4 (Tg = - 106°C) ; (2) SBR solution (taux exprimé en SBR sec) ; 25% de styrène, 58 % de motifs polybutadiène 1-2 et 22% de motifs polybutadiène 1-4 trans (Tg = - 21 °C) ; (3) TPS SEPS (« Septon 2007 » de la société Kuraray ) ; (4) TPS SEEPS (« Septon 4033 » de la société Kuraray ) ; (5) TPS SEBS (« Septon 8004 » de la société Kuraray ) ; (6) silice (« Zeosil 1165 MP » de la société Rhodia, type « HD ») - (BET et CTAB : environ 160 m²/g) ; (7) agent de couplage TESTP (« Si69 » de la société Degussa) ; (8) Noir de carbone : N234 (grade ASTM) ; (9) huile MES (« Catenex SNR » de la société Shell) ; (10) polylimonène (« Dercolyte L120 de la société DRT) ; (11) stéarine ( "Pristerene" de la société Uniquema) ; (12) oxyde de zinc (grade industriel - société Umicore) ; (13) soufre ; (14) N-cyclohexyl-2-benzothiazyl-sulfénamide (Santocure CBS de la société Flexsys) ; (15) DPG = Diphénylguanidine (« Perkacit DPG » de la société Flexsys) ; (16) N-1,3-diméthylbutyl-N-phénylparaphénylènediamine (Santoflex 6-PPD de la société Flexsys) ; (17) Cire anti-ozone. | | | | |

**Tableau 3**

| Composition n° | C.1 | C.2 | C.3 | C.4 | C.5 | C.6 | C.7 | C.8 |
|---|---|---|---|---|---|---|---|---|
| Shore A | 65 | 78 | 80 | 80 | 68 | 72 | 74 | 73 |
| MA 10 | 5 | 11 | 12 | 12 | 2.3 | 8 | 8.4 | 8 |
| MA 100 | 1.8 | 3 | 3.3 | 3.2 | 2.3 | 2.8 | 3 | 3 |
| Tg(δ)_{40°C} | 0.21 | 0.21 | 0.21 | 0.23 | 0.23 | 0.22 | 0.22 | 0.22 |

## Revendications

1. Pneumatique dont la bande de roulement comporte une composition élastomère comprenant :
- 10 à 60 pce d'un élastomère polybutadiène (BR) ;
- plus de 15 pce à moins de 55 pce d'un élastomère thermoplastique styrénique (TPS) saturé ;
- une charge renforçante.

2. Pneumatique selon la revendication 1, dans lequel le taux de BR est compris entre 20 et 55 pce.

3. Pneumatique selon l'une quelconque des revendications 1 à 2, dans lequel l'élastomère TPS saturé comporte des blocs styrène et des blocs alkylène.

4. Pneumatique selon la revendication 3, dans lequel les blocs alkylène sont des blocs éthylène ou propylène ou butylène.

5. Pneumatique selon la revendication 4, dans lequel l'élastomère TPS saturé est choisi dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

6. Pneumatique selon la revendication 5, dans lequel l'élastomère TPS saturé est choisi dans le groupe constitué par les copolymères blocs styrène/éthylène/ butylène (SEBS), styrène/éthylène/éthylène/propylène/styrène (SEEPS), styrène/éthylène/propylène/styrène (SEPS) et les mélanges de ces copolymères.

7. Pneumatique selon l'une quelconque des revendications 1 à 6, dans lequel la composition élastomère comporte en outre un second élastomère diénique choisi dans le groupe constitué par le copolymère styrène-butadiène (SBR), le caoutchouc naturel (NR), les polyisoprènes de synthèse (IR), les copolymères isoprène-styrène (SIR), les copolymères isoprène-butadiène (BIR), les terpolymères styrène-butadiène-isoprène (SBIR) et les mélanges de ces élastomères.

8. Pneumatique selon la revendication 7, dans lequel le taux du second élastomère diénique est compris entre 0 et 80 pce.

9. Pneumatique selon la revendication 8, dans lequel le taux du second élastomère diénique est compris dans un domaine de 5 et 60 pce.

10. Pneumatique selon l'une quelconque des revendications 1 à 9, dans lequel la composition de caoutchouc comporte en outre un agent plastifiant.

11. Pneumatique selon la revendication 10, dans lequel le taux d'agent plastifiant est compris entre 5 et 50 pce.

12. Pneumatique selon les revendications 10 ou 11, dans lequel l'agent plastifiant est une résine hydrocarbonée, dont la température de transition vitreuse (Tg) est supérieure à 0 C.

13. Pneumatique selon la revendication 12, dans lequel la résine hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères de terpène, les résines d'homopolymères ou copolymères de terpène phénol, les résines d'homopolymères ou copolymères de coupe C5, les résines d'homopolymères ou copolymères de coupe C9 et les mélanges de ces résines.

14. Pneumatique selon les revendications 10 ou 11, dans lequel l'agent plastifiant est liquide à 20°C et possède une température de transition vitreuse (Tg) inférieure à -20°C.

15. Pneumatique selon la revendication 14, dans lequel l'agent plastifiant liquide est choisi dans le groupe constitué par les huiles naphténiques, les huiles paraffiniques, les huiles MES, les huiles TDAE, les plastifiants esters, les plastifiants éthers, les plastifiants phosphates, les plastifiants sulfonates et les mélanges de ces composés.

16. Pneumatique selon la revendication 15, dans lequel l'agent plastifiant comporte une résine hydrocarbonée selon les revendications 12 ou 13 et un plastifiant liquide selon les revendications 14 ou 15.

17. Pneumatique selon l'une quelconque des revendications 1 à 16, dans lequel la composition de caoutchouc comporte une charge renforçante comportant du noir de carbone, de la silice ou un mélange de noir de carbone et de silice.

## Patentansprüche

1. Luftreifen, dessen Lauffläche eine Elastomerzusammensetzung umfasst, die
- 10 bis 60 phe eines Polybutadienelastomers (BR-Elastomers);
- mehr als 15 phe eines gesättigten thermoplastischen Styrolelastomers (TPS-Elastomers);
- einen verstärkenden Füllstoff
umfasst.

2. Luftreifen nach Anspruch 1, wobei der BR-Gehalt zwischen 20 und 55 phe liegt.

3. Luftreifen nach einem der Ansprüche 1 bis 2, wobei das gesättigte TPS-Elastomer Styrolblöcke und Alkylenblöcke umfasst.

4. Luftreifen nach Anspruch 3, wobei es sich bei den Alkylenblöcken um Ethylen- oder Propylen- oder Butylenblöcke handelt.

5. Luftreifen nach Anspruch 4, wobei das gesättigte TPS-Elastomer aus der Gruppe bestehend aus Styrol-Ethylen-Butylen-Blockcopolymeren (SEB), Styrol-Ethylen-Propylen-Blockcopolymeren (SEP), Styrol-Ethylen-Ethylen-Propylen-Blockcopolymeren (SEEP), Styrol-Ethylen-Butylen-Styrol-Blockcopolymeren (SEBS), Styrol-Ethylen-Propylen-Styrol-Blockcopolymeren (SEPS), Styrol-Ethylen-Ethylen-Propylen-Styrol-Blockcopolymeren (SEEPS) und Mischungen dieser Copolymere ausgewählt ist.

6. Luftreifen nach Anspruch 5, wobei das gesättigte TPS-Elastomer aus der Gruppe bestehend aus Styrol-Ethylen-Butylen-Styrol-Blockcopolymeren (SEBS), Styrol-Ethylen-Ethylen-Propylen-Styrol-Blockcopolymeren (SEEPS), Styrol-Ethylen-Propylen-Styrol-Blockcopolymeren (SEPS) und Mischungen dieser Copolymere ausgewählt ist.

7. Luftreifen nach einem der Ansprüche 1 bis 6, wobei die Elastomerzusammensetzung außerdem ein zweites Dienelastomer aus der Gruppe bestehend aus Styrol-Butadien-Copolymer (SBR), Naturkautschuk (NR), synthetischen Polyisoprenen (IR), Isopren-Styrol-Copolymeren (SIR), Isopren-Butadien-Copolymeren (BIR), Styrol-Butadien-Isopren-Terpolymeren (SBIR) und Mischungen dieser Elastomere umfasst.

8. Luftreifen nach Anspruch 7, wobei der Gehalt des zweiten Dienelastomers zwischen 0 und 80 phe liegt.

9. Luftreifen nach Anspruch 8, wobei der Gehalt des zweiten Dienelastomers zwischen 5 und 60 phe liegt.

10. Luftreifen nach einem der Ansprüche 1 bis 9, wobei die Kautschukzusammensetzung außerdem einen Weichmacher umfasst.

11. Luftreifen nach Anspruch 10, wobei der Weichmachergehalt zwischen 5 und 50 phe liegt.

12. Luftreifen nach Anspruch 10 oder 11, wobei es sich bei dem Weichmacher um ein Kohlenwasserstoffharz mit einer Glasübergangstemperatur (Tg) von mehr als 0°C handelt.

13. Luftreifen nach Anspruch 12, wobei das Kohlenwasserstoffharz aus der Gruppe bestehend aus Homopolymer- oder Copolymerharzen von Cyclopentadien (abgekürzt CPD) oder Dicyclopentadien (abgekürzt DCPD), Terpen-Homopolymer- oder -Copolymerharzen, Terpenphenol-Homopolymer- oder -Copolymerharzen, C5-Schnitt-Homopolymer- oder -Copolymerharzen, C9-Schnitt-Homopolymer- oder -Copolymerharzen und Mischungen dieser Harze ausgewählt ist.

14. Luftreifen nach Anspruch 10 oder 11, wobei der Weichmacher bei 20°C flüssig ist und eine Glasübergangstemperatur (Tg) von weniger als -20°C aufweist.

15. Luftreifen nach Anspruch 14, wobei der flüssige Weichmacher aus der Gruppe bestehend aus naphthenischen Ölen, Paraffinölen, MES-Ölen, TDAE-Ölen, Ester-Weichmachern, Ether-Weichmachern, Phosphat-Weichmachern, Sulfonat-Weichmachern und Mischungen dieser Verbindungen ausgewählt ist.

16. Luftreifen nach Anspruch 15, wobei der Weichmacher ein Kohlenwasserstoffharz gemäß Anspruch 12 oder 13 und einen flüssigen Weichmacher gemäß Anspruch 14 oder 15 umfasst.

17. Luftreifen nach einem der Ansprüche 1 bis 16, wobei die Kautschukzusammensetzung einen verstärkenden Füllstoff umfasst, der Ruß, Kieselsäure oder eine Mischung von Ruß und Kieselsäure umfasst.

## Claims

1. Tyre, the tread of which comprises an elastomer composition comprising:
- 10 to 60 phr of a polybutadiene (BR) elastomer;
- more than 15 phr to less than 55 phr of a saturated thermoplastic styrene (TPS) elastomer; and
- a reinforcing filler.

2. Tyre according to Claim 1, in which the BR content is between 20 and 55 phr.

3. Tyre according to either one of Claims 1 and 2, in which the saturated TPS elastomer comprises styrene blocks and alkylene blocks.

4. Tyre according to Claim 3, in which the alkylene blocks are ethylene, propylene or butylene blocks.

5. Tyre according to Claim 4, in which the saturated TPS elastomer is chosen from the group formed by styrene/ethylene/butylene (SEB), styrene/ethylene/propylene (SEP), styrene/ethylene/ethylene/propylene (SEEP), styrene/ethylene/butylene/styrene (SEBS), styrene/ethylene/propylene/styrene (SEPS), styrene/ethylene/ethylene/propylene/styrene (SEEPS) block copolymers and blends of these copolymers.

6. Tyre according to Claim 5, in which the saturated TPS elastomer is chosen from the group formed by styrene/ethylene/butylenes/styrene (SEBS), styrene/ethylene/ethylene/ propylene/styrene (SEEPS), styrene/ethylene/propylene/styrene (SEPS) block copolymers and blends of these copolymers.

7. Tyre according to any one of Claims 1 to 6, in which the elastomer composition also comprises a second diene elastomer chosen from the group formed by styrene-butadiene copolymers (SBRs), natural rubber (NR), synthetic polyisoprenes (IRs), isoprene-styrene copolymers (SIRs), isoprene-butadiene copolymers (BIRs), styrene-butadiene-isoprene terpolymers (SBIRs) and blends of these elastomers.

8. Tyre according to Claim 7, in which the content of the second diene elastomer is between 0 and 80 phr.

9. Tyre according to Claim 8, in which the content of the second diene elastomer is in a range from 5 to 60 phr.

10. Tyre according to any one of Claims 1 to 9, in which the rubber composition also comprises a plasticizing agent.

11. Tyre according to Claim 10, in which the content of plasticizing agent is between 5 and 50 phr.

12. Tyre according to Claim 10 or 11, in which the plasticizing agent is a hydrocarbon-based resin, the glass transition temperature (T_{g}) of which is above 0°C.

13. Tyre according to Claim 12, in which the hydrocarbon-based resin is chosen from the group formed by cyclopentadiene (abbreviated to CPD) or dicyclopentadiene (abbreviated to DCPD) homopolymer or copolymer resins, terpene homopolymer or copolymer resins, terpene-phenol homopolymer or copolymer resins, C₅-cut homopolymer or copolymer resins, C₉-cut homopolymer or copolymer resins and blends of these resins.

14. Tyre according to Claim 10 or 11, in which the plasticizing agent is liquid at 20°C and has a glass transition temperature (T_{g}) below -20°C.

15. Tyre according to Claim 14, in which the liquid plasticizing agent is chosen from the group formed by naphthenic oils, paraffinic oils, MES oils, TDAE oils, ester plasticizers, ether plasticizers, phosphate plasticizers, sulphonate plasticizers and mixtures of these compounds.

16. Tyre according to Claim 15, in which the plasticizing agent comprises a hydrocarbon-based resin according to Claim 12 or 13 and a liquid plasticizer according to Claim 14 or 15.

17. Tyre according to any one of Claims 1 to 16, in which the rubber composition comprises a reinforcing filler comprising carbon black, silica or a mixture of carbon black and silica
